# EUROPÄISCHE PATENTSCHRIFT

(11) **EP 0 592 524 B1**
(45) Veröffentlichungstag und Bekanntmachung des Hinweises auf die Patenterteilung: **04.10.1995**
(21) Anmeldenummer: 92914324.6
(22) Anmeldetag: 06.07.1992
(51) Int. Cl.: G01C 21/20, G09B 29/10

(54) **ELEKTRONISCHES ORIENTIERUNGSGERÄT**
ELECTRONIC GUIDE DEVICE
GUIDE ELECTRONIQUE

(30) Priorität: 04.07.1991 DE 4122398
(43) Veröffentlichungstag der Anmeldung: 20.04.1994
(73) Patentinhaber: ROBERT BOSCH GMBH, 70442 Stuttgart (DE)
(72) Erfinder: Ueberschaer, Hans-Jörg, W-1000 Berlin 12 (DE)
(86) Internationale Anmeldenummer: DE9200565
(87) Internationale Veröffentlichungsnummer: WO9301469

(56) Entgegenhaltungen:
- DE-A- 3 405 125
- DE-A- 4 033 829
- FR-A- 2 603 727
- US-A- 4 570 227
- MACHINE DESIGN. Bd. 54, Nr. 22, September 1982, Cleveland, US, Seite 2: "Automatic map guides driver to his destination"
- VNIS 89 Conference Record, 11.-13. September 1989 Toronto, Ontario, Kanada, D.L.FRANK: "Information Systems: An Integral Part of Future Vehicles", Seiten 85-88
- PATENT ABSTRACTS OF JAPAN, Bd. 9, Nr. 174 (P-374)(1897) 19. Juli 1985;& JP-A-60048573

## Beschreibung

Die Erfindung betrifft ein elektronisches Orientierungsgerät, welches insbesondere als Stadtführer geeignet und mit einem brieftaschengroßen LCD - Bildschirm für alle relevanten Daten, die zum Beispiel Touristen interessieren, versehen ist.

Die bekannten Stadtpläne sind meist aus Papier hergestellt und gefaltet, worunter ihre Handhabung bei stürmischen Wetter leidet. Zwar konnte die Handlichkeit durch entsprechende Faltarten verbessert werden, jedoch ist für Fußgänger, die schnell zur nächsten Haltestelle für öffentliche Verkehrsmittel oder Taxis gelangen müssen oder aus dem Verzeichnis der Straßennamen in das aufzusuchende Planquadrat des Stadtplan springen müssen, der Zeitaufwand beim Blättern und Lesen im Verzeichnis sowie beim Aufsuchen der Planquadrate erheblich. Außerdem ist die Haltbarkeit des Planes durch die vielen Faltknicke beschränkt. Auch sind mechanische Syteme für einen Stadtführer bekannt, die ein Rollen der gezeigten Stadtplanausschnitte gestatten, aber welche für eine Gesamtübersicht zu unübersichtlich sind. Beiden Systemen ist gemeinsam, daß sie nur schwer eine Standortbestimmung zulassen und ihre Aktualisierung nur durch den Kauf eines neuen Stadtplanes möglich ist.

Es sind bereits Orientierungsgeräte für Fahrzeuge bekannt, die aber unhandlich sind und mit der Bordspannung versorgt werden und schon deshalb nicht als tragbarer Stadtführer für Touristen geeignet sind (Automobil Revue: der Copilot heißt "Cain",September 1985, 80.Jahrgang Nr.39, Seite51). Durch den Einsatz im Auto ist eine Handbedienung nur möglich, wenn dies die Verkehrssituation zu läßt. Neben dem Bordrechner ist deshalb ein Ortsbestimmungssystem erforderlich.

In der DE-PS 29 25 656 wird ein Fahrzeuggerät zur Zielführung unter Verwendung von fahrzeugautonomen Bestandteilen, insbesondere Bewegungsmelder und Routensuchalgorithmus im programmgesteuerten Auswerteblock, vorgeschlagen, welches externe Stützpunkte (Sender) zur Korrektur der exakten Position erfordert.

Ein weiteres derartiges Gerät ist der Blaupunkt Travelpilot, der aus einer Compact-Disc-Einheit (CD-ROM-Player), einem Navigationsrechner mit alphanumerischer Eingabemöglichkeit, welche seitlich eines Monitors angeordnet ist, besteht. Das Anzeigefeld des Monitors weist eine fest vorgegebene erste Markierung für den eingebbaren Standort und eine zweite Markierung für den eingebbaren Zielort auf, wobei eine geographischen Karte unter der ersten Markierung bewegbar und zoombar dargestellt wird.

Die exakte Funktion derartiger Geräte ist von der Positionsermittlung und der Bestimmung des zurückgelegten Weges und der Fahrtrichtung über Kilometerzähler und Kompaß abhängig und noch so ungenau, daß eine Navigation über Satellit bzw. zusätzliche Orientierungshilfen vorgeschlagen wurden.

Zur Ortbestimmung ist eine anfängliche Orientierung und eine aufwendige und umständliche Eingabe der Straßennamen über die alphanumerische Tastatur und in zeitlichen Abständen eine wiederholte Eingabe zur Korrektur der augenblicklichen Position erforderlich.

Aus der DE 40 33 829 A1 ist eine Dienstleistungs-Informationseinrichtung bekannt, bei der beispielsweise Dienstleistungsbetriebe der Gastronomie auf einer elektronischen Landkarte darstellbar sind. Mittels einer Tastatur können gewünschte Betriebe mit zugeordneten Informationen, beispielsweise über die Lage, Telefonnummer, Service usw. ausgegeben werden. Das ermöglicht dem Benutzer, rasch alle gewünschten dienstleistungsbezogenen Informationen dieses Betriebes zu erhalten. Die Dienstleistungs-Informationseinrichtung hat zwei Speicher, wobei in einem Speicher die Kartendaten und im zweiten Speicher die Dienstleistungsinformationen gespeichert sind. Bei Aufruf eines Dienstleistungsbetriebes wird nun aus dem einen Speicher die Straßenkarte und aus dem zweiten Speicher der oder die entsprechenden Dienstleistungsbetriebe abgerufen und durch Überlagerung auf der Landkarte dargestellt. Durch Umschalten kann die gewünschte Dienstleistungsinformation eines ausgewählten Betriebes abgerufen werden.

Die Schrift DE-A-4 033 829 bildet die Grundlage für den Oberbegriff des Patentanspruchs 1.

Im Gegensatz zu den bisherigen Orientierungsgeräten, die in der Hauptsache zur Zielführung die einzuschlagende Richtung weisen sollen, bezweckt die Erfindung eine hilfreiche Unterstützung bei der Ermittlung des eigenen Standortes bzw. der Standorte besonderer geographischer Objekte vorbestimmten Typs und der zu ihnen hinführenden Wege, günstigen Verkehrsmittel usw. zu geben.

Der Erfindung liegt die Aufgabe zugrunde, durch ein Gerät der eingangs genannten Gattung die Handlichkeit, die Einstellung des Ausgangspunktes, die Schnelligkeit der Standortbestimmung und die Aktualisierbarkeit bei einfachster Handhabung zu verbessern.

Die Aufgabe wird mit den Merkmalen des Anspruchs 1 gelöst.

Basierend auf der farbigen Anzeigemöglichkeit mittels der bekannten und bei anderen Geräten verbreiteten LCD - Displays können unter Verwendung einer austauschbaren Speicherkarte bzw. CD-ROM alle relevanten Daten beispielsweise einer Großstadt, wie ein Stadtplan, ein Straßenverzeichnis sowie alle wichtigen oder interessanten Punkte der Stadt in einem handgroßen elektronischen Gerät als Stadtführer eingegeben und angezeigt werden.

Die Erfindung geht von der Überlegung aus, daß mittels Computer leicht solche Speicherkarten für jede Weltstadt erstellt bzw. aktualisiert werden und in allen Hauptsprachen in Reisebüros, Hotels oder Postschaltern erhältlich sein könnten. Die Position wird auf der Speicherkarte vermerkt, wenn sie in ein an solchen o.g. oder anderen Orten (beispielsweise Telefonzellen) befindliches Aktualisierungs - Gerät gesteckt werden.

Ein im Gerät des elektronischen Stadtführers befindlicher Mikrorechner gestattet eine übersichtliche Anzeige des optimalen Weges zwischen zwei Punkten. Für Fußgänger die schnell zur nächsten Haltestelle für öffentliche Verkehrsmittel oder Taxis gelangen müssen oder aus dem Verzeichnis der Straßennamen in das aufzusuchende Planquadrat des Stadtplan springen müssen, wird die Handhabung wesentlich erleichtert.

Die Unübersichtlichkeit des Stadtplanes wurde dadurch überwunden, daß mittels einer bestimmten Ebene eine Anzahl möglicher Ziele auswählbar angezeigt werden kann und gleichzeitig unnötige Informationen bei der Anzeige unterdrückbar sind.

Es sind Ebenen mit vollständigeren Informationen nacheinander einblendbar, wobei das Gesamtbild des Stadtplanes oder eines bestimmten anwählbaren Ausschnittes von diesem in dem Maße wiederherstellbar wird, wie die Anzahl der eingeblendeten Ebenen erhöht wird. Auch sind durch die Verknüpfung von ausgewählten Ebenen solche, in einem gewöhnlichen Stadtplan nicht realisierbare, Darstellungen möglich, wie die Verknüpfung und ausschließliche Anzeige von Radfahrwegen und Parks oder von Wegen und bestimmten Bedürfnisanstalten (WC's). Postämter, Banken, Krankenhäuser u.a. wichtige Einrichtungen, die dem Standort am nächsten liegen, sind sofort ersichtlich und somit schneller auf optimalen Wegen erreichbar. Zugleich läßt die Wahl des Maßstabes eine in gewöhnlichen Stadtplänen herkömmlicher Art nicht mögliche stufenweise Vergrößerung zu.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: Ausführung eines elektronisches Orientierungsgerätes als Stadtführer
- Figur 2: Bedienablaufplan
- Figur 3: Blockschaltbild des elektronischen Orientierungsgerätes

Das Gerät ist für beidhändige Bedienung eingerichtet. Der elektronische Stadtführer weist auf jeder Seite Bedienelemente in Bedienfeldern und in der Mitte die eigentliche Anzeige mit Cursor (als Linie bzw. Kreuz) auf.

Das elektronische Gerät des Stadtführers weist an einer Stelle eine Maßstabsanzeige 3 und auf der linken Seite im ersten Bedienfeld 21 erste und zweite Bedienelemente 4 und 5 für die Umschaltung des Maßstabes und damit der Darstellung des Planausschnittes im LCD - Display 2, weitere Bedienelemente 18 bis 20 im rechten Bedienfeld 23 für die Anwahl von mindestens einem anderem Planquadrat, im zweiten Bedienfeld 22 Positionierelemente 7, 8, 9 und 10 für die relative Bewegungsrichtung des Cursorkreuzes 1 im LCD-Display 2, im ersten Bedienfeld 21 dritte und vierte Bedienelemente 13 und 14 sowie ein fünftes Menü-Bedienelement 11 und ein sechstes Bedienelement zur Quittierung 12 (Q - Taste) auf. Seitlich, vorzugsweise im oberen Seitenteil, befinden sich der Einschubschlitz 15 für CD-ROM bzw. für Speicherkarten. In einer anderen Variante wird der Einschub auf der Rückseite realisiert. Vorzugsweise ebenfalls sind die Anschlüsse für eine externe Stromversorgung 16 und für Computer 17 angeornet.

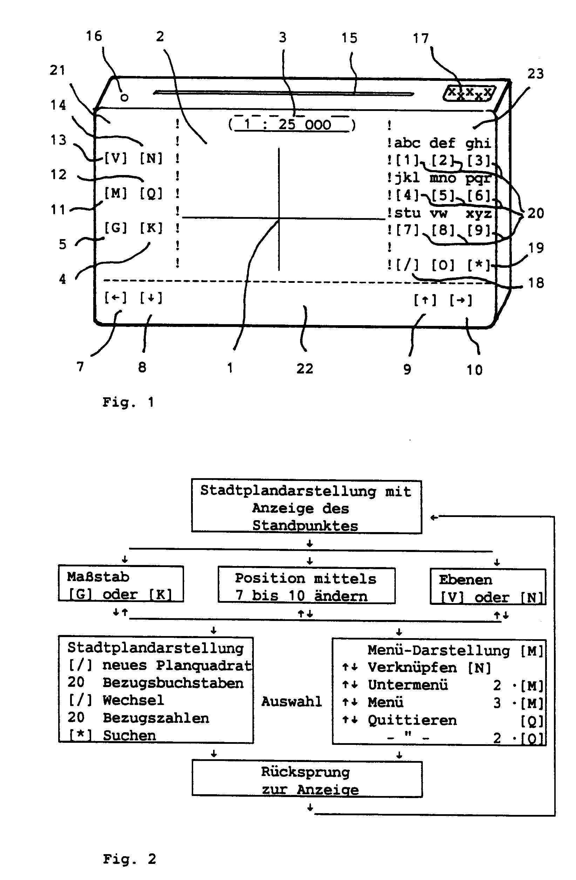

Die Figur 2 verdeutlicht den Ablauf bei der Bedienung. Der Cursor 1 wird nach dem Einschalten des Gerätes als Kreuz auf dem Stadtplan oder als Linie auf dem Straßenverzeichnis abgebildet. Bevorzugt ist dabei die Darstellung des Stadtplanes oder eines Teil davon für den eigenen Standpunkt, der durch die Speicherkarte eingegeben wird.

Wenn anfangs der gesamte Stadtplan dargestellt wird, geschieht dies mit wenigen Ebenen, welche S-Bahnen, U-Bahnen nebst zugehörigen Bahnhöfen und wichtige Straßen zur Anzeige im LCD - Display 2 bringen. An einer bevorzugten Stelle wird zugleich der Maßstab 3 der Darstellung des Planes angezeigt, bzw. im LCD - Display 2 eingeblendet. Nach dem Betätigen der Bedienelementes 4 oder 5 erfolgt eine Umschaltung des Maßstabes und damit wahlweise auf eine kleinere oder größere Darstellung des Planauschnittes im LCD - Display 2.

Mittels des Bedienelementes 18 im rechten Bedienfeld 23 kann mindestens ein anderes Planquadrat im fest eingestelltem Maßstab 1:150000 angewählt werden. Zunächst erfolgt eine Buchstabengruppeneingabe, beispielsweise das Feld [ghi] mit den Bedienelementen 20, dann wird durch die Betätigung des Bedienelementes 18 auf Zahleneingabe, beispielsweise [10], gewechselt. Mit dem Bedienelement 19 wird auf Suchen des Planquadrates [ghi10] umgeschaltet, welches anschließend über das LCD - Display 2 dargestellt wird.

Die Feinpositionierung der Bildmitte zum Cursorkreuz 1 geschieht durch ein Verschieben des Stadtplanes entgegengesetzt zur Pfeilrichtung, die auf den Positionierelementen 7, 8, 9, 10 angegeben wird und die der relativen Bewegungsrichtung des Cursorkreuzes entspricht. Die relativ zueinander erfolgende Bewegung von Cursorkreuz und Stadtplan verläuft dabei diagonal, wenn die zwei entsprechenden Positionierelemente, beispielsweise 7 und 8 oder 9 und 10, betätigt werden.

Bei Betätigung des Menü-Bedienelements 11 erscheint in der Anzeige das Straßenverzeichnis, welches mittels der Positionierelemente 8 und 9 nach oben und nach unten gerollt bzw. mit den Positionierelementen 7 und 10 nach rechts und links geblättert werden kann.

Bei der nochmaligen Betätigung des Menü-Bedienelements 11 erschein ein Untermenü bzw. ein alphabetisch geordnetes Verzeichnis der einzelnen Ebenen im LCD - Display 2.

Erfolgt die Betätigung des Menü-Bedienelements ein drittes mal, erscheint in der Anzeige wieder das Straßenverzeichnis (Hauptmenü).

Der im Hauptmenü aufgerufene und auf der Cursorlinie 1 liegende Straßenname kann im Untermenü hinsichtlich eventueller Bahnhöfe, Banken, Bäder, Buslinien, Cafe's, erste Hilfe-Stationen, Flughafen, Haltestellen, Hotels, Restaurants, Taxis ... usw. auf die gleiche oben beschriebene Weise mittels der Positionierelemente 7 bis 10 abgesucht werden.

Bei Bedarf kann eine Verknüpfung von Objekten (einzelnen Ebenen) über das dritte Bedienelement 13 nach der Quittierung mit dem sechsten Bedienelement 12 veranlaßt werden. Durch zweimaliges Betätigen des Menü-Bedienelements 11 steht die Cursorlinie wieder auf dem ersteren Objekt (eine der Ebenen). Im Verzeichnis wird nun jedoch diejenige nächste Ebene mittels der Positionierelemente 7 bis 10 ausgewählt, mit der die erstere verknüpft und angezeigt werden soll.

Die Quittierung mittels des Bedienelementes 12 veranlaßt eine Anzeige der Adresse bzw. nur der Hausnummer und eventuell der Telefonnummer des im Verzeichnis als Ebene ausgewahlten Objektes. Bei dieser Anzeige wird der Cursor als waagerechte Linie abgebildet oder seine Anzeige ganz unterdrückt. Die andere Variante besteht in einem fest installierten, insbesondere auf dem LCD - Display aufgedruckten Cursorkreuz 1. Eine weitere Quittierung bringt den Stadtplan in dem LCD - Display 2 mit Cursorkreuz zur Darstellung.

Die Verknüpfung kann mit anderen Ebenen wiederholt durchgeführt werden. Ebenso ist eine Verknüpfung von Straßennamen, welche im Hauptmenü aufgelistet sind, mittels des dritten Bedienelementes 13 möglich, wenn zuvor mit dem sechsten Bedienelement 12 quittiert worden ist. Ebenfalls sind auf oben beschriebene Weise Verknüpfungen von Straßennamen und von in bzw. an anderen Straßen gelegenen Objekten möglich. Nach nochmaliger Betätigung des sechsten Bedienelementes 12 erfolgt der Rücksprung in die Stadtplandarstellung. Das Cursorkreuz 1 steht dann im Stadtplan auf dem jeweils ersten Objekt der zuerst ausgewählten Ebene bzw. auf der zuletzt ausgewählten Straße.

Die Einstellung vereinfacht sich, wenn im Untermenü eine bestimmte Sonderebene aufgerufen wird, die eine gleichzeitige Anzeige von einer bestimmten Anzahl von Ebenen in Standardverknüpfung veranlaßt. Die Quittierung erfolgt wieder mittels des sechsten Bedienelementes 12 und es gelangt zunächst eine Information über die im gewählten Maßstab darstellbare Anzahl und miteinander verknüpften ausgewählten Objekten zur Anzeige. Die nochmalige Betätigung des sechsten Bedienelementes 12 veranlaßt wieder den Rücksprung in die Stadtplandarstellung.

Einerseits kann Über das dritte Bedienfeld 23 das über dem ersten ausgewählten Objekt bzw. über dem Standort stehende Cursorkreuz über einen anderen Punkt des Stadtplanes gestellt werden, indem die Abbildung des neu ausgewählten Stadtplanteils unter dem Cursorkreuz 1 erfolgt. Dann wird die Maßstabsveränderung über die ersten und zweiten Bedienelemente 4 und 5 vorgenommen.

Andererseits kann mittels der Bedienelemente 7 bis 10 eine Veränderung der Position des Cursorkreuzes durch ein Wegschieben des darunter dargestellten Stadtplanes vorgenommen werden. Wird jetzt das Menü-Bedienelement 11 betätigt, erscheint die Liste der Straßennamen, wobei der Name der rechts oberhalb am dichtesten beim Cursorkreuz 1 liegenden Straße, auf bzw. oberhalb der Kursorlinie abgebildet wird.

Während mittels Menü und Untermenü in der bereits oben beschriebenen Weise Straßennamen nach interessierenden sich in der Straße befindlichen Objekten, beispielsweise hinsichtlich Sehenswürdigkeiten, absuchbar sind, lassen sich in der Stadtplandarstellung ganze Stadtteile bzw. der gesamte Stadtplan oder auch das kleinste Planquadrat nach interessierenden Objekten auf einfache Weise absuchen. Mit dem dritten Bedienelement 13 werden dazu direkt weitere Informationsebenen, insbesondere in einer vom Herausgeber der Speicherkarten gewichteten Reihenfolge hinzugefügt (addiert) oder mit einem weiteren vierten Bedienelement 14 weggenommen (subtrahiert). Für die alleinige Darstellung von Objekten einer Ebene bezogen auf den gesamten Stadtplan existiert eine Möglichkeit dadurch, daß im Menü ein Sondername aufgerufen und quittiert wird und danach im Untermenü der verlangte Typ von Objekten (beispielsweise sämtliche im Stadtgebiet befindliche Gaststätten, Bushaltestellen usw.) eingestellt und quittiert wird.

Die Erfindung wird an einem Beispiel näher erläutert. Ist das Planquadrat [ghi10] angewählt worden, kann mittels der Bedienelemente 7 bis 10 das im Randbezirk befindliche Planquadrat i9 unter dem Cursorkreuz positioniert werden. Dann wird der Maßstab verkleinert und weiter positioniert, bis das gesuchte Planquadrat [i9xy], zum Beispiel [i987], erreicht ist.

Vorzugsweise wird ein Bildbreiten/Höhen - Verhältnis 1 : 1 realisiert, jedoch sind grundsätzlich auch andere Verhältnisse denkbar.

Wenn ein solches Planquadrat, zum Beispiel i9, durch die Auswahl von 26 Buchstaben und 26 Zahlen definiert ist, dann wird bei einer Anzeigefeldgröße von 10 · 10 cm² im Maßstab 1:50 000 eine geographische Fläche von 5 · 5 km² widergegeben. Der kleinste darstellbare und mit dem ersten Bedienelement 4 auswählbare Maßstab beträgt zum Beispiel 1:5000 , weshalb bei einem Bildbreiten/Höhen - Verhältnis von 1 zu 1 Stadtgebiete mit einer waagerechten und senkrechten Ausdehnung von 50 m pro cm abbildbar sind. Mit dem dritten Bedienelement 13 lassen sich maximal 100 Ebenen kumulieren und dann, wenn es die Übersichtlichkeit erfordert, wieder mittels des vierten Bedienelements 14 auf eine gewünschte Anzahl reduzieren. Für jedes der 67 600 kleinsten Planquadrate im Maßstab 1:5000 stehen in der Speicherkarte beispielsweise 10⁴ bit in einer Ebene zur Verfügung. Die Speicherkapazität kann durch andere geeignete scheibenförmige Aufzeichnungsträger erhöht werden, so daß auch kleinere Maßstäbe realisierbar sind. Bei 10 bis 100 Ebenen mit mehr oder weniger vollständigen Informationen bzw. mit Sonderebenen mit bereits kumulierten Informationen, beispielsweise Sportstätten bei Olympiaden, ist eine handhabbare Auswahl möglich.

In Weiterführung der Erfindung werden für die Sonderebenen Extrakarten bzw. Extraspeicherplatten insbesondere Extra - CD - ROM's in den Einschubschlitz 15 des Gerätes eingeführt. Somit wird bei Messen, Olympiaden, Volksfesten usw. für die Veranstalter eine bequeme Möglichkeit geschaffen, die Besucher über die Lage des Veranstaltungsortes im Stadtplan und die günstigen dorthin führenden Verkehrsmittel, die Veranstaltungszeiten bzw. Öffnungszeiten aktuell zu informieren.

Jede Sonderebene Zₙ enthält mindestens die Objekte einer Menge zum Beispiel Z₁: Abschleppdienst, Autovermietung, Campingplatz, Parkhäuser und Parkplätze, oder Z₂: Busse, S - Bahnen, Staßenbahnen, U - Bahnen, Bahnhöfe, Flughafen, Taxis, oder Z₃: Angelstelle, Badestelle, Bootsverleih, Flußbrücke, Schleuse, Seen, Schwimmbäder, oder Z₃: Antiquitäten, Banken, Buchladen, Cafe's, Hotels, Post, oder Z₄: Ärzte, Bäder, erste Hilfe, Hospital, oder Z₅: Ausstellungen, Aussichtsturm, Kinos, Konzertsäle, Museen, Sehenswürdigkeiten, Theater, Zoo, oder Z₆: Fahrradwege, Wanderwege, Gärten, Parks und weitere Mengen.

In einer Variante liegen die Objekte streng alphabetisch geordnet und untereinander beliebig kombinierbar vor. In einer anderen speicheroptimalen Variante wird die Ordnung erst nachträglich durch den Mikrorechner hergestellt.

Vorteilhaft wird eine auswählbare Verknüpfung insbesondere dann, wenn unterschiedliche Objekte (Ebenen) verschiedener Straßen des Staßenverzeichnisses (Menü) miteinander kombiniert dargestellt werden sollen. Wander- bzw. Radwege, die in die Straße münden oder dicht an der Straße vorbeiführen und leicht per Fuß erreicht werden können, lassen sich so mit in anderen Stadtteilen gelegenen Objekten (Seen, Park) verknüpfen und übersichlich unter Weglassung aller nicht notwendigen Objekte (Ebenen) darstellen. Die Darstellung sämtlicher Objekte ist aufgrund der Auflösung des LCD - Displays und schon wegen der Übersichtlichkeit nur bei starker Vergrößerung (kleiner Maßstab) möglich und sinnvoll, weshalb eine Priorität der Anzeige der zuerst verknüpften Objekte (Ebenen) bei zu groß gewähltem Maßstab gewährleistet und solange die Anzeige weiterer Ebenen unterdrückt wird, bis der Maßstab durch Betätigung des zweiten Bedienelements 5 verkleinert (Vergrößerung der Planausschnitte) wird. Beim maximal eingestellten Maßstab von 1 : 1 000 000 kann beispielsweise ein Stadtgebiet von 130 · 130 km auf dem LCD - Display 2 (mit einem Anzeigefeld von 10 · 10 cm² ) dargestellt werden.

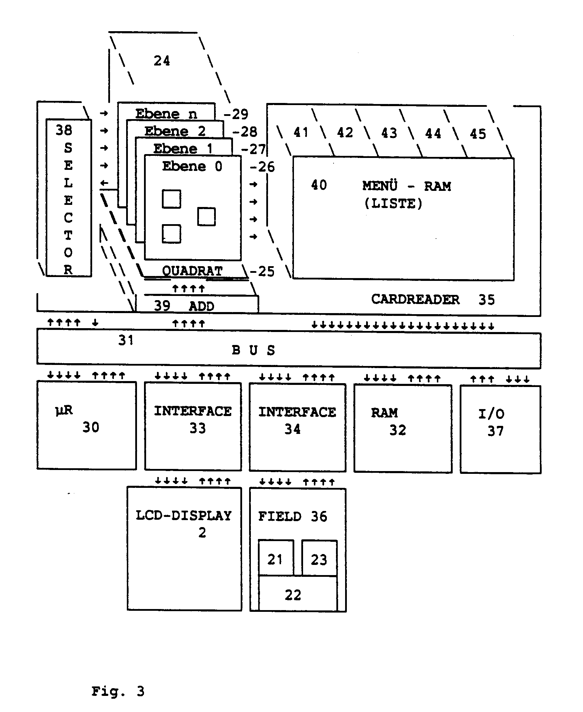

Eine vorteilhafte Ausführung der Erfindung ist in der Figur 3 als Blockschaltbild gezeigt. Das elektronische Orientierungsgerät besteht aus einem Mikrorechner 30, und aus mit diesem jeweils über einen Bus 31 verbundene programmierbare Speicher 32, je einem Interface 33 und 34 für ein LCD-Display 2 und für eine Feldeingabeeinheit 36, einer Leseeinheit 35 und einer Ein/Ausgabe-Schnittstelle 37 für den Anschluß 17 eines externen Computers. Das Gerät ist für eine beidhändige Bedienung auf jeder Seite mit Bedienelementen in Bedienfeldern 21, 22 und 23 und in der Mitte mit einer Anzeige mit Cursor (als Linie bzw. Kreuz) ausgestattet. Vorzugsweise ist das dritte Bedienfeld 23 rechts angeordnet und als Folientastaturbedienfeld 6 gestaltet, während das erste Bedienfeld 21 links angeordnet ist und die Folientasten 4 und 5, 11 und 12, 13 und 14 enthält. Ein zweites unter dem LCD - Display angeordnetes Bedienfeld 22 weist ebenfalls Folientasten 7, 8, 9 und 10 auf. Die Leseeinheit 35 des elektronischen Stadtführers besteht aus einer Auswahlschaltung 38 und Adressiereinheit 39 sowie Speicher 40 bis 45, die einen Speicherbereich für die genaue Lage der Straßen und das Straßenverzeichnis (Hauptmenü) für die Straßennamen der durch die Auswahlschaltung 38 (Selector) aufgerufenen Planquadrate 25 und Speicherbereiche für auswählbare geographische Objekte (Informationen der Ebenen 0 bis n) aufweisen.

Das Gerät ist hinsichtlich der Stromversorgung autark und insbesondere mit Solarzellen und/oder Batterien ausgerüstet. Es kann zusätzlich mit einem Anschluß für eine externe Stromversorgung 16 versehen werden.

Erfolgt in den Einschubschlitz 15 der Einschub einer auswechselbaren vorprogrammierten Speicherkarte 24 bzw. Speicherplatte, insbesondere CD - ROM, und ein Einschalten des Geräts, steuert der Mikrorechner 30 über den Bus 31, die Adressiereinheit 39 und den Selector 38 das Planquadrat 25 mit der Standortinformation an, welche in den Speicher der Leseeinheit 35 übernommen und zwischengespeichert wird, bis sie vom Mikrorechner abgerufen wird. Über den Selector 38 wird, gesteuert durch den Mikrorechner 30, der Maßstab als Anzahl der darstellbaren Ebenen eines Planquadrates der eingeschobenen Speicherkarte berücksichtigt. Über den Aufruf der Anzahl an Ebenen ist damit die maximale mögliche Anzahl der Verknüpfung definiert. Durch den Einschub weiterer Speicherkarten mit Sonderebenen für die jeweiligen identischen Planquadrate, kann die Anzahl der in den Speicher der Leseeinheit eingelesenen Ebenen zusätzlich erhöht bzw. verändert werden, wenn dies für eine besondere Darstellung benötigt wird. Dazu werden nach der Herausnahme der ersten Speicherkarte 24 aus dem Einschubschlitz 15 nacheinander die Bedienelemente 12, 13, 12 betätigt. Auf diese Weise kann die Menge an Informationen zu einem Planquadrat kumuliert werden, bis der Speicher der Leseeinheit vollständig gefüllt ist, was durch eine zusätzliche, an geeigneter Stelle erfolgende blinkende, Einblendung in die Darstellung durch das LCD - Display 2 signalisierbar ist.

Hierbei erfolgt nach der Quittierung mit dem Bedienelement 12 durch den Mikrorechner 30 eine Ermittlung der restlichen noch freien Speicherkapazität der Kartenleserspeicher 40 bis 45. Steigt mit der Quittierung die Zahl der in den Kartenleserspeicher zu übernehmenden Ebenen, wird zunehmend der noch verfügbare Speicherplatz erschöpft. Über den Selector 38 wird vom Mikrorechner 30 sowohl die Anzahl der zu verknüpfenden bzw. in Sonderebenen verknüpft vorliegenden einzulesenden Ebenen in Abhängigkeit von der Anzahl der Planquadrate, die dem eingestelltem Maßstab entspricht, vorgegeben, als auch festgestellt, ob mit den Sonderebenen eine Verknüpfung mehrerer Ebenen hinzukommt, die die noch freie Speicherkapazität übertreffen würde. Zur Warnung blinkt an einer geeigneten Stelle in der Anzeige der Hinweis "Positionieren und Maßstab verkleinern" auf, oder die Anzeige blinkt insgesamt, wenn der noch freie Speicherplatz erschöpft wird. Wird daraufhin mittels der Positionierelemente 7 bis 10 die Lage des zu vergrößernden Bildausschnittes unter das Cursorkreuz 1 gebracht, und eine Verkleinerung mit dem Bedienelement 4 durchgeführt, ist die Freimachung von Speicherplätzen, d.h. die teilweise Informationslöschung vorbereitet, und die Anzahl der einzulesenden Ebenen kann durch das Betätigen des Bedienelementes 13 befohlene Einlesen von dem jeweiligem Planquadrat zugeordneten weiteren Informationen, die bei Quittierung mit dem Bedienelement 12 veranlaßt wird, erhöht werden.

Die zwischengespeicherten Ebenen 0 bis n werden vom Mikrorechner 30 unter Benutzung der Speicher 32 verknüpft, wobei der Mikrorechner 30 als Filter für die darzustellende Information wirkt und letztere so positioniert, daß unter dem Cursorkreuz der Standort auffindbar ist. Werden über das Bedienfeld 22 eine neue Position für das Cursorkreuz eingegeben, ermittelt der Mikrorechner 30 das auszuwählende Planquadrat 25. Wird auch der Maßstab verändert, werden gesteuert vom Mikrorechner 30 über den Selector 38, unter Einschluß bzw. Ausschluß einer vorwählbaren Anzahl von Ebenen, weitere Planinformationen aus der Speicherkarte 24 in die Kartenlesespeicher 40 bis 45 eingelesen und dabei die bisherigen Informationen kumuliert bzw. reduziert oder verändert.

In der Ebene 0 sind vorzugsweise die Straßennamen gespeichert, so kann bei Betätigung des Menü - Bedienelementes 11 eine schnelle Suche einer ersten Anzahl der zum Menü gehörigen Namen sowie ihre Zwischenspeicherung im Speicherbereich 40 erfolgen, um dann das Menü gesteuert über den Mikrorechner 30 durch den Aufruf der anderen Planquadrate zu vervollständigen, zu ordnen und so über das Interface 33 in das LCD - Display 2 zu bringen.

Der Mikrorechner 30 erkennt jede über das Interface 34 und den Bus 31 neu eingebene Position der Kursorlinie, falls diese mittels der Bedienelemente 7 bis 10 auf der Liste der Straßennamen verschoben wird, ohne daß mit dem Bedienelement 12 quittiert werden muß. Auf dem LCD - Display 2 wird somit die Darstellung zur neuen Position gerollt bzw. geblättert. Erst nach einer Quittierung wird die zuletzt eingegebene Position gehalten und es kann ein Untermenü bzw. weiteres Menü aufgerufen werden.

Auf gleiche Weise kann eine Auswahl im Untermenü getroffen und zur Anzeige gebracht werden. In vorteilhafter Weise werden weitere Ebenen an Informationen für den Typ, die Graphik, Farbe, Symbole, Bereichsinformationen, alhpanume-rischen Informationen wie Objektnamen, Adressen, Telefonnummern und/oder anderen Informationen genutzt, welche intern für die Arbeit des Mikrorechners 30 benötigt werden, ohne daß sie direkt in der Anzeige dargestellt werden. In den Speicherbereichen der Speicher 40 bis 45 können so Informationen einer Menge kumuliert werden, welche einigen oder allen Planquadraten zugeordnet sind. Somit können, wenn der darzustellende Stadtplanausschnitt größer als ein Planquadrat ist, alle Objekte einer Menge, beispielsweise alle postämter, angezeigt werden. Der Mikrorechner 30 überwacht dabei das Einlesen in den Leseeinheitspeicher und signalisiert das Stoppen der Einspeicherung, gegebenfalls nach einer optischen und/oder akustischen Warnung vor Erschöpfung der Speicherkapazität.

Wird das Cursorkreuz 1 über eines dieser in der Stadtplandarstellung gezeigten Objekte in Stellung gebracht, ist in der bereits beschriebenen Weise die genaue Adresse abrufbar, wenn das Menü - Bedienelement 11 zweimal betätigt und eine Quitierung mit 12 erfolgt. In vorteilhafter Weise kann statt der Speicherkarte 24 für höheren Speicherplatzbedarf eine Speicherplatte, insbesondere eine CD - ROM eingesetzt werden.

In einer weiteren nicht dargestellten Variante ist das LCD-Display mit einer durchsichtigen druckempfindlichen Schicht beschichtet und sämtliche oder wenigsten einige Bedienelemente sind als Softwaretastatur angezeigt und werden über das LCD-Display per Fingerdruck betätigt.

Der Anschluß für externe Computer 17 kann in Weiterführung der Erfindung auch als Druckerschnittstelle oder dazu genutzt werden, die Darstellung des Stadtplanes auf anderen Bildschirmen wiederzugeben, insbesondere dann, wenn mit dem Gerät nur eine Schwarz/Weiß- oder eingeschränkte Farb-Darstellung durch das LCD - Display 2 realisiert wird.

## Patentansprüche

1. Elektronisches Orientierungsgerät mit einem Display zur Darstellung einer geographischen Karte mit Verbindungswegen und Objekten, die durch kumulative Überlagerung auf der geographischen Karte des Displays darstellbar sind, mit einer alphanumerischen Eingabe mit mehreren in Bedienfelder angeordneten Bedienelementen zum Scrollen oder Durchblättern der geographischen Karte oder deren Kartenausschnitte in einem vorgegebenen Maßstab und/oder von Informationsebenen mit typweise gespeicherten geographischen Objekten, mit einer Leseeinheit für einen Aufzeichnungsträger, auf dem in einem ersten Speicher die Kartendaten und in einem zweiten Speicher die geographischen Objekte nach vorgegebenen Typen mit ihren Daten und Bezeichnungen in Informationsebenen gespeichert, mit den Bedienelementen abrufbar und auf dem Display darstellbar sind, dadurch gekennzeichnet, daß das Orientierungsgerät als portables Handgerät ausgebildet ist, daß der Aufzeichnungsträger scheibenförmig ist, daß das Display (2) einen Cursor (1) für die Markierung des eigenen Standorts des Bedieners des Orientierungsgerätes aufweist, wobei mittels Positionierelementen (7, 8. 9, 10) die geographische Karte relativ zum Cursor (1) verschiebbar ist, daß ein drittes Bedienelement (13) ausgebildet ist, beim mehrmaligen Betätigen mehrere Informationsebenen mit vollständigeren Informationen übereinanderliegend unter Berücksichtigung des Maßstabs lagerichtig darzustellen und daß ein viertes Bedienelement (14) vorgesehen ist, mit dem bei Betätigung einzelne Informationsebenen auf der Karte löschbar sind.

2. Elektronisches Orientierungsgerät nach Anspruch 1, dadurch gekennzeichnet, daß auf dem scheibenförmigen Aufzeichnungsträger eine aktuelle Position speicherbar ist.

3. Elektronisches Orientierungsgerät nach Anspruch 1 oder 2, dadurch gekennzeichnet, daß ein Bedienfeld (23) alphanumerische Bedienelemente (20) mit wenigstens zwei im Alphabet nebeneinanderstehenden Buchstaben und eine Zahl aufweist.

4. Elektronisches Orientierungsgerät nach Anspruch 3, dadurch gekennzeichnet, daß das Gerät links des Displays (2) mit einem ersten Bedienfeld (21) und rechts mit dem dritten Bedienfeld (23) für eine beidhändige Bedienung ausgebildet ist, daß das Gerät auf der Vorderseite mit einer Maßstabsanzeige (3), auf einer anderen Seite mit einer Öffnung (15) für auswechselbare Aufzeichnungsträger (24) und im Inneren des Gerätes mit einer eigenen Energiequelle sowie mit einer die Leseeinheit( 35) für den scheibenförmigen Aufzeichnungsträger (24), einem Bus (31) und einer einen Mikrorechner (30) aufweisenden Schaltung zur Standortbestimmung und zur Verarbeitung und Abgabe von Zusatzinformationen ausgerüstet ist.

5. Elektronisches Orientierungsgerät nach Anspruch 4, dadurch gekennzeichnet,
- daß die einen Mikrorechner (30) aufweisende Schaltung zur Standortbestimmung und zur Verarbeitung und Abgabe von Zusatzinformationen, zusätzlich einen programmierbaren Speicher (32), ein Interface (33, 34) für das Display (2) und für eine mit den Bedienfeldern (21, 22 und 23) gekoppelte Feldeingabeeinheit (36) enthält, welche mit dem Mikrorechner (30), dem Lesegerät (35) für scheibenförmige Aufzeichnungsträger (24) und untereinander über den Bus (31) in Verbindung stehen,
- daß die Leseeinheit (35) für scheibenförmige Aufzeichnungsträger (24), eine mit dem Bus (31) gekoppelte Adressiereinheit (39), eine Auswahlschaltung (38) und einen Speicher (40, 41, 42, 43, 44 und 45) für die Typen der auswählbaren geographischen Objekte und der zusätzlichen Informationen, für die genaue Lage der Straßen und das Verzeichnis der Straßennamen sowie der Namen der auswählbaren Objekte, aufweist, und
- daß im ersten Bedienfeld (21) mindestens ein erstes Bedienelement (4) für das Zoomen und Kumulieren der auswählbaren Typen charakteristischer geographischer Objekte und ein fünftes und sechstes Bedienelement (11) und (12) für das Aufsuchen von, aus einer Liste auswählbaren, geographischen Objekten in geographischen Bereichen und für die Quittierung angeordnet sind.

6. Elektronisches Orientierungsgerät nach Anspruch 5, dadurch gekennzeichnet, daß der Mikrorechner (30) über den Bus (31) mit einer Ein/Ausgabe-Schnittstelle (37) für den Anschluß (17) eines externen Computers, Druckers und/oder Bildschirms verbunden ist und daß das Gerät einen Anschluß (16) für eine zusätzliche externe Stromversorgung aufweist.

7. Elektronisches Orientierungsgerät nach Anspruch 5, dadurch gekennzeichnet, daß der scheibenförmige Aufzeichnungsträger ausgebildet ist, die Speicherung der Typen der geographischen Objekte und der zusätzlichen Informationen in Form von zu einem kleinsten Planquadrat zugehörigen Ebenen für alle Planquadrate (25) durchzuführen.

8. Elektronisches Orientierungsgerät nach einem der vorangehenden Ansprüche 5-7, dadurch gekennzeichnet, daß der Mikrorechner (30) ausgebildet ist, mittels der Auswahlschaltung (38) sowohl die Anzahl der zu verknüpfenden bzw. in Sonderebenen verknüpft vorliegenden einzulesenden Ebenen in Abhängigkeit von der Anzahl der Planquadrate, die dem eingestellten Maßstab entspricht, vorzugeben, als auch festzustellen, ob mit den Sonderebenen eine Verknüpfung mehrerer Ebenen hinzukommt, die die noch freie Speicherkapazität der Speicher (40, 41, 42, 43, 44 und 45) übertreffen würde, und in letzterem Fall eine optische und/oder akustische Signalisierung als Hinweis zur Verkleinerung des Maßstabes abzugeben.

9. Elektronisches Orientierungsgerät nach einem der Patentansprüche 5-8, dadurch gekennzeichnet, daß der Mikrorechner (30) ausgebildet ist, den Ausgangspunkt des Benutzers des Gerätes oder dessen Standort anhand einer Zuordnung von auf dem Display (2) sichtbaren geographischen Objekten zu markieren und/oder die Standortbestimmung anhand der in den Verzeichnissen gespeicherten zusätzlichen Informationen festzulegen und nach erfolgter Auswahl in dem zugehörigen geographischen Bereich darzustellen.

10. Elektronisches Orientierungsgerät nach Anspruch 9, dadurch gekennzeichnet, daß der Mikrorechner (30) ausgebildet ist, die Ermittlung der Standorte besonderer geographischer Objekte und der günstigsten Wege ihrer Erreichbarkeit vorzugsweise anhand von aus einer Liste auswählbaren geographischen Objekten oder wahlweise anhand der alphanumerisch durchführbaren Eingabe der Planausschnitte und/oder anhand einer Positionierbewegung von Planausschnitt und Cursor (1) relativ zueinander durchzuführen.

11. Elektronisches Orientierungsgerät nach einem der vorangehenden Ansprüche 9 und 10, dadurch gekennzeichnet, daß die Positionierelemente (7 bis 10) ausgebildet sind, die Darstellung im Display (2) unter dem Cursor (1) in beliebiger Richtung zu verschieben und die Darstellung wahlweise der charakteristischen geographischen Objekte eines Typs in der Nähe des Cursors (1) oder zusätzlich der Anzeige des am dichtesten am Cursor (1) befindlichen Namens aus einem Verzeichnis der Namen der geographischen Objekte sowie die Anzeige der zusätzlichen Informationen zu ändern.

12. Elektronisches Orientierungsgerät nach Anspruch 11, dadurch gekennzeichnet, daß das Gerät ausgebildet ist, für die Darstellung eine wahlweise Verknüpfung von Straßen in einem Hauptmenü und/oder von Objekten in einem Untermenü über das dritte Bedienelement (12) durchzuführen, wobei die Quittierung mittels des sechsten Bedienelementes (12) eine Anzeige des Straßennamens oder der Adresse und/oder der Hausnummer und/oder der Telefonnummer der im Verzeichnis als letzte ausgewählten Straße bzw. Ebene veranlaßt.

13. Elektronisches Orientierungsgerät nach Anspruch 12, dadurch gekennzeichnet, daß das Gerät ausgebildet ist, die Verknüpfung mit anderen Straßen und/oder Ebenen des selben oder eines weiteren Aufzeichnungsträgers (24) wiederholt durchzuführen.

14. Elektronisches Orientierungsgerät nach Anspruch 13, dadurch gekennzeichnet, daß das Gerät ausgebildet ist, daß bei doppelter Betätigung des sechsten Bedienelements (12) der Rücksprung in die Stadtplandarstellung erfolgt, wobei das Cursorkreuz dann im Stadtplan auf dem jeweils ersten Objekt der zuerst ausgewählten Ebene bzw. auf der zuletzt ausgewählten Straße steht.

15. Elektronisches Orientierungsgerät nach Anspruch 1, dadurch gekennzeichnet, daß das Gerät ausgebildet ist, für die Darstellung des Stadtplanes oder eines Teils davon für die Auffindung desjenigen Standortes, der durch die am Standort erhältlichen bzw. aktualisierten Aufzeichnungsträger (24) eingebbar ist.

16. Elektronisches Steuergerät nach einem der vorangehenden Ansprüche, dadurch gekennzeichnet, daß das Gerät als Zielführungsgerät einsetzbar ist, wobei die verknüpften geographischen Objekte alle in ihrer Verknüpfung bzw. mit den günstigsten Wegen ihrer Erreichbarkeit darstellbar sind.

17. Elektronisches Orientierungsgerät nach einem der vorangehenden Ansprüche, dadurch gekennzeichnet, daß der Cursor (1) nach dem Einschalten des Gerätes als Kreuz auf der geographischen Karte, vorzugsweise einem Stadtplan, oder als Linie auf dem Straßenverzeichnis abgebildet ist und/oder bedarfsweise ausgeblendet werden kann.

18. Elektronisches Orientierungsgerät nach einem der vorangehenden Ansprüche, dadurch gekennzeichnet, daß die Öffnung (15) als Einschubschlitz an einer Seite des Gerätes für den Einschub des auswechselbaren Aufzeichnungsträger (24), vorzugsweise einer Compactdiskete (CD) ausgebildet ist.

19. Elektronisches Orieniterungsgerät nach einem der vorangehenden Ansprüche, dadurch gekennzeichnet, daß als Display (2) ein LCD-Farbdisplay eingesetzt ist.

## Claims

1. Electronic orientation device having a display for representing a geographical map with connecting ways and objects which can be represented by cumulative superimposition on the geographical map of the display, having alphanumeric input by means of a plurality of control elements, arranged in control fields, for scrolling or leafing through the geographical map or map excerpts thereof at a given scale and/or information levels having geographical objects stored by type, having a read unit for a recording carrier on which in a first memory the map data, and in a second memory the geographical objects are stored according to prescribed types with their data and designations in information levels, in such a manner that they can be recalled by means of the control elements and can be represented on the display, characterized in that the orientation device is constructed as a portable hand-held device, in that the recording carrier is disc-shaped, in that the display (2) has a cursor (1) for marking the location of the operator of the orientation device, it being possible to displace the geographical map relative to the cursor (1) by means of positioning elements (7, 8, 9, 10), in that a third control element (13) is constructed for the purpose, in the case of repeated operation, of representing a plurality of information levels having more complete information and situated one above another, while taking account of the scale, and in that a forth control element (14) is provided by means of which it is possible upon operation to erase individual information levels on the map.

2. Electronic orientation device according to Claim 1, characterized in that a current position can be stored on the disc-shaped recording carrier.

3. Electronic orientation device according to Claim 1 or 2, characterized in that one control field (23) has alphanumeric control elements (20) having at least two alphabetically contiguous letters and one number.

4. Electronic orientation device according to Claim 3, characterized in that the device is constructed for two-handed operation with a first control field (21) to the left of the display (2) and the third control field (23) to the right, and in that the device is equipped on the front side with a scale display (3), on another side with an opening (15) for exchangeable recording carriers (24) and in the interior of the device with a dedicated energy source as well as with the read unit (35) for the disc-shaped recording carrier (24), a bus (31) and a circuit, having a microcomputer (30), for determining location and for processing and outputting additional information.

5. Electronic orientation device according to Claim 4, characterized
- in that the circuit, having a microcomputer (30), for determining location and for processing and outputting additional information additionally includes a programmable memory (32), an interface (33, 34) for the display (2) and for a field input unit (36) coupled to the control fields (21, 22 and 23), all of which are connected to the microcomputer (30), the read device (35) for disc-shaped recording carriers (24) and to one another via the bus (31),
- in that the read unit (35) for disc-shaped recording carriers (24) has an addressing unit (39) coupled to the bus (31), a selector circuit (38) and a memory (40, 41, 42, 43, 44 and 45) for the types of selectable geographical objects and the additional information, for the exact position of the streets and the list of the street names and of the names of the selectable objects, and
- in that there are arranged in the first control field (21) at least one first control element (4) for zooming and accumulating the selectable types of characteristic geographical objects, and a fifth and sixth control element (11) and (12) for searching for geographical objects which are in geographical regions and can be selected from a list, and for acknowledgement.

6. Electronic orientation device according to Claim 5, characterized in that the microcomputer (30) is connected via the bus (31) to an input/output interface (37) for the connection (17) of an external computer, printer and/or display screen, and in that the device has a connection (16) for an additional external power supply.

7. Electronic orientation device according to Claim 5, characterized in that the disc-shaped recording carrier is constructed for the purpose of carrying out, for all grid squares (25), the storage of the types of geographical objects and the additional information in the form of levels belonging to a smallest grid square.

8. Electronic orientation device according to one of the preceding Claims 5 - 7, characterized in that the microcomputer (30) is designed to use the selector circuit (38) both to prescribe as a function of the number of the grid squares, which corresponds to the scale set, the number of the levels which are to be combined or are present, combined in special levels, and are to be read in, and to establish whether the special levels are accompanied by a combination of a plurality of levels, which combination would exceed the still free storage capacity of the memories (40, 41, 42, 43, 44 and 45), and in the latter case to output an optical and/or acoustic signal as advice to reduce the scale.

9. Electronic orientation device according to one of Patent Claims 5 - 8, characterized in that the microcomputer (30) is designed to mark the starting point of the user of the device or its location by assigning geographical objects visible on the display (2), and/or to fix the determination of location with the aid of the additional information stored in the lists, and to represent it in the associated geographical region after selection has been performed.

10. Electronic orientation device according to Claim 9, characterized in that the microcomputer (30) is designed to carry out the determination of the locations of special geographical objects and the most favourable ways by which they can be reached, preferably with the aid of geographical objects which can be selected from a list, or optionally by inputting the grid segments, which can be carried out alphanumerically, and/or with the aid of a positioning movement of the grid segment and cursor (1) relative to one another.

11. Electronic orientation device according to one of the preceding Claims 9 and 10, characterized in that the positioning elements (7 to 10) are designed to displace the representation in the display (2) in an arbitrary direction under the cursor (1) and to change the representation optionally of the characteristic geographical objects of one type in the vicinity of the cursor (1) or, additionally, of a display of the name, which is located closest to the cursor (1), from a list of the names of the geographical objects, as well as to change the display of the additional information.

12. Electronic orientation device according to Claim 11, characterized in that the device is designed to carry out for the representation an optional combination of streets in a main menu and/or of objects in a submenu via the third control element (12), the acknowledgement by means of the sixth control element (12) causing a display of the street name or of the address and/or of the house number and/or of the telephone number of the street or level selected as last in the list.

13. Electronic orientation device according to Claim 12, characterized in that the device is designed to carry out repeatedly the combination with other streets and/or levels of the same or of a further recording carrier (24).

14. Electronic orientation device according to Claim 13, characterized in that the device is designed such that upon dual operation of the sixth control element (12) the return to the town plan representation takes place, the cursor cross then being positioned in the town plan on the respective first object of the firstly selected level or on the street last selected.

15. Electronic orientation device according to Claim 1, characterized in that the device is designed, for the representation of the town plan or a part thereof for the purpose of finding that location which can be input by the recording carrier (24) obtainable at the location or updated.

16. Electronic control device according to one of the preceding claims, characterized in that the device can be used as a target-tracking device, it being possible for all the combined geographical objects to have their combination represented or to be represented with the most favourable ways in which they can be reached.

17. Electronic orientation device according to one of the preceding claims, characterized in that after the device has been switched on, the cursor (1) is imaged as a cross on the geographical map, preferably a town plan, or as a line on the list of streets, and/or can be faded out if required.

18. Electronic orientation device according to one of the preceding claims, characterized in that the opening (15) is constructed as an insertion slot on one side of the device for the insertion of the exchangeable recording carrier (24), preferably a compact disc (CD).

19. Electronic orientation device according to one of the preceding claims, characterized in that an LCD colour display is used as the display (2).

## Revendications

1. Appareil électronique d'orientation comprenant un affichage pour représenter une carte géographique avec des chemins de liaison et des objets, et qui par superposition cumulative s'affiche sur la carte géographique de l'écran, une entrée alphanumérique avec plusieurs champs de commande munis d'éléments de commande pour dérouler ou feuilleter la carte géographique ou des extraits de la carte, selon une échelle prédéterminée, et/ou des tableaux d'informations avec des objets géographiques enregistrés par types, une unité de lecture pour un support d'enregistrement sur lequel, dans une première mémoire, on enregistre les données de la carte et, dans une seconde mémoire, on enregistre les objets géographiques selon les types prédéterminés, avec leurs données et leurs dénominations dans des tableaux d'informations, que l'on peut appeler avec des éléments de commande et afficher sur l'écran d'affichage, appareil d'orientation caractérisé en ce qu'il s'agit d'un appareil portatif à main, le support d'enregistrement étant en forme de disque, l'écran (2) comportant un curseur (1) pour le marquage de l'emplacement de l'utilisateur sur l'appareil d'orientation, des éléments de positionnement (7, 8, 9, 10) permettant de déplacer la carte géographique par rapport au curseur (1), un troisième élément de manoeuvre (13) permettant, par une commande multiple, de représenter plusieurs tableaux d'informations avec des informations plus complètes, de manière superposée en tenant compte de l'échelle, suivant une représentation correcte en position, et ce qu'un quatrième élément de manoeuvre (14) permet, par actionnement, d'effacer les différents tableaux d'informations de la carte.

2. Appareil électronique d'orientation selon la revendication 1, caractérisé en ce qu'une position instantanée peut s'enregistrer sur le support d'enregistrement en forme de disque.

3. Appareil électronique d'orientation selon la revendication 1 ou 2, caractérisé en ce qu'un champ de commande (23) comporte des éléments de commande alphanumériques (20) avec au moins deux lettres voisines dans l'alphabet et un nombre.

4. Appareil électronique d'orientation selon la revendication 3, caractérisé en ce qu'il comporte à gauche de l'écran d'affichage (2), un premier champ de commande (21) et à droite un troisième champ de commande (23) pour une commande avec les deux mains, l'appareil ayant sur la face avant un affichage de l'échelle (3) et sur un autre côté, une ouverture (15) pour un support d'enregistrement (24) interchangeable et, à l'intérieur de l'appareil, une source d'énergie ainsi qu'un circuit comprenant l'unité de lecture (35) pour le support d'enregistrement (24) en forme de disque, un bus (31) et un microcalculateur (30) pour déterminer l'emplacement et traiter et émettre les informations complémentaires.

5. Appareil électronique d'orientation selon la revendication 4, caractérisé en ce que :
- un circuit comprend un microcalculateur (30) prévu pour déterminer l'emplacement, traiter et émettre des informations supplémentaires, en plus d'une mémoire programmable (32), une interface (33, 34) pour l'affichage (2) et une unité d'entrée (36) couplée aux champs de manoeuvre (21, 22, 23) qui sont reliés par le bus (31) avec le microprocesseur (30), le lecteur (35) du support d'enregistrement en forme de disque (24), et entre eux,
- l'unité de lecture (35) du support d'enregistrement en forme de disque (24) comprend une unité d'adressage (39) couplée au bus (31), un circuit de sélection (38) et une mémoire (40, 41, 42, 43, 44, 45) pour les différents types d'objets géographiques susceptibles d'être sélectionnés, les informations supplémentaires pour la position précise des rues et la liste des noms de rues ainsi que les noms des objets susceptibles d'être sélectionnés, et
- dans un premier champ de manoeuvre (21), il y a au moins un premier élément de manoeuvre (4) pour l'effet de zoom et le cumul de types choisis d'objets géographiques caractéristiques, ainsi qu'un cinquième et un sixième élément de manoeuvre (11) et (12) pour la recherche d'objets géographiques d'une liste sélectionnée dans des zones géographiques et pour l'acquittement.

6. Appareil électronique d'orientation selon la revendication 5, caractérisé en ce que le microcalculateur (30) est relié par le bus (31) à une interface entrée/sortie (37) pour le branchement (17) d'un ordinateur supplémentaire, d'une imprimante et/ou d'un tableau image, et en ce que l'appareil comporte un branchement (16) pour une alimentation externe supplémentaire.

7. Appareil électronique d'orientation selon la revendication 5, caractérisé en ce que le support d'enregistrement est en forme de disque, et en ce que l'enregistrement de types d'objets géographiques et d'informations supplémentaires se présente sous la forme d'un tableau appartenant au plus petit rectangle du plan pour tous les rectangles du plan (25).

8. Appareil électronique d'orientation selon l'une des revendications précédentes 5-7, caractérisé en ce que le microcalculateur (30) prédétermine à l'aide du circuit de sélection (38) à la fois le nombre de tableaux à combiner ou à inscrire de manière combinée dans des plans particuliers, en fonction du nombre de rectangles du plan, pour une échelle déterminée et pour constater si à des plans particuliers s'ajoute une combinaison de plusieurs plans qui dépasserait la capacité encore disponible des mémoires (40, 41, 42, 43, 44, 45) et, dans ce dernier cas, donnerait un signal optique et/ou acoustique comme indication pour la réduction de l'échelle.

9. Appareil électronique d'orientation selon l'une des revendications 5-8, caractérisé en ce que le microcalculateur (30) assure le marquage du point de départ de l'utilisateur de l'appareil ou de son emplacement, à l'aide d'une association des objets géographiques apparaissant sur le tableau d'affichage (2), et/ou détermine l'emplacement à l'aide d'informations supplémentaires enregistrées dans une liste et, une fois la sélection effectuée, l'affichage se fait dans la zone géographique concernée.

10. Appareil électronique d'orientation selon la revendication 9, caractérisé en ce que le microcalculateur (30) détermine l'emplacement d'objets géographiques particuliers et les chemins les plus pratiques pour les atteindre, à l'aide d'objets géographiques sélectionnés dans une liste ou, au choix, à l'aide de l'entrée sous forme alphanumérique des extraits du plan et/ou à l'aide d'un mouvement de positionnement de l'extrait du plan et du curseur (1) l'un par rapport à l'autre.

11. Appareil électronique d'orientation selon l'une des revendications précédentes 9 et 10, caractérisé en ce que les éléments de positionnement (7 à 10) sont réalisés pour déplacer l'affichage sur l'écran d'affichage (2), sous le curseur (1), dans une direction quelconque, et pour modifier sélectivement la représentation des objets géographiques caractéristiques d'un certain type, à proximité du curseur (1) ou, en plus de l'affichage du nom le plus près du curseur (1), sur une liste de noms d'objets géographiques, ainsi que l'affichage des informations supplémentaires.

12. Appareil électronique d'orientation selon la revendication 11, caractérisé en ce que pour l'affichage d'une combinaison choisie de rues dans un menu principal et/ou d'objets dans un sous-menu, on utilise un troisième élément de manoeuvre (12), l'acquittement se faisant à l'aide du sixième élément de manoeuvre (12) pour afficher le nom de rue ou l'adresse et/ou le numéro de l'immeuble et/ou le numéro de téléphone, de la rue ou du tableau choisi en dernier lieu dans la liste.

13. Appareil électronique d'orientation selon la revendication 12, caractérisé en ce qu'il est réalisé pour se combiner de manière répétée avec d'autres rues et/ou plans du même support d'enregistrement (24) ou d'un autre support d'enregistrement.

14. Appareil électronique d'orientation selon la revendication 13, caractérisé en ce que, lorsque le sixième élément de manoeuvre (13) est actionné deux fois, on revient à l'affichage du plan, le curseur en forme de croix se trouvant alors dans le plan de la ville sur le premier objet du plan choisi d'abord ou de la rue choisie en dernier lieu.

15. Appareil électronique d'orientation selon la revendication 1, caractérisé en ce qu'il est réalisé pour introduire la représentation du plan de la ville ou d'une partie de ce plan, pour trouver l'emplacement respectif qui a été défini par l'introduction du support d'enregistrement (24) obtenu à l'emplacement ou actualisé à cet endroit.

16. Appareil électronique de commande selon l'une des revendications précédentes, caractérisé en ce que l'appareil s'utilise comme appareil de guidage vers une destination, les objets géographiques combinés pouvant être représentés dans leur combinaison ou avec les chemins les plus avantageux pour les atteindre.

17. Appareil électronique d'orientation selon l'une des revendications précédentes, caractérisé en ce que le curseur (1), après le branchement de l'appareil, apparaît sous la forme d'une croix sur la carte géographique qui est de préférence un plan de ville, ou comme une ligne sur la liste des noms de rues, et/ou peut être le cas échéant masqué.

18. Appareil électronique d'orientation selon l'une des revendications précédentes, caractérisé en ce que l'ouverture (15) est une fente prévue sur un côté de l'appareil pour recevoir un support d'enregistrement interchangeable (24), de préférence une disquette compacte (CD).

19. Appareil électronique d'orientation selon l'une des revendications précédentes, caractérisé en ce que l'écran (2) est un affichage en couleurs à cristaux liquides.
